(19) Europäisches Patentamt / European Patent Office / Office européen des brevets

(11) **EP 2 346 909 B1**

(12) **EUROPEAN PATENT SPECIFICATION**


(45) Date of publication and mention of the grant of the patent:
**16.05.2018 Bulletin 2018/20**

(21) Application number: **09826801.4**

(22) Date of filing: **13.11.2009**

(51) Int Cl.:
***C08F 20/56*** (2006.01) ***C08F 226/02*** (2006.01)
***C08F 226/06*** (2006.01) ***C08F 2/06*** (2006.01)

(86) International application number:
**PCT/US2009/064299**

(87) International publication number:
**WO 2010/056934 (20.05.2010 Gazette 2010/20)**


(54) **POLYMERS DERIVED FROM N-VINYL FORMAMIDE, VINYL AMIDES OR ACRYLAMIDES, AND REACTION SOLVENT, AND THE USES THEREOF**

AUS N-VINYL-FORMAMID ABGELEITETE POLYMERE, VINYLAMIDE ODER ACRYLAMIDE SOWIE REAKTIONSLÖSUNGSMITTEL UND VERWENDUNGEN DAVON

POLYMÈRES DÉRIVÉS DU N-VINYLFORMAMIDE, DE VINYLE AMIDES OU D'ACRYLAMIDES ET DE SOLVANT DE RÉACTION, ET LEURS UTILISATIONS


(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **13.11.2008 US 114165 P**

(43) Date of publication of application:
**27.07.2011 Bulletin 2011/30**



(73) Proprietor: **Isp Investments Inc.**
**Wilmington, DE 19801 (US)**

(72) Inventors:
- **MUSA, Osama, M.**
**Hillsbough**
**NJ 08844 (US)**
- **CUIYUE, Lei**
**Wayne**
**NJ 07470 (US)**
- **NARAYANAN, Kolazi, S.**
**Wayne**
**NJ 07470 (US)**

(74) Representative: **Harrison, Susan Joan et al**
**Mewburn Ellis LLP**
**City Tower**
**40 Basinghall Street**
**London EC2V 5DE (GB)**



(56) References cited:
**EP-A1- 1 033 378**
**DE-A1- 4 441 940**
**DE-A1- 19 825 330**
**US-A- 5 478 553**
**US-A1- 2003 018 152**
**US-A1- 2003 018 152**
**US-B1- 6 458 348**
**US-B1- 6 852 815**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 2 346 909 B1

## Description

### FIELD OF THE INVENTION

The invention relates to polymers that are derived from at least: *N*-vinyl formamide, one vinyl amide moiety or one acrylamide moiety, and a reaction solvent capable of forming an adduct. Surprisingly, these polymers have been discovered to possess exceptionally high cloud point temperatures and inhibitory properties against the formation of gas hydrates and corrosion.

Due to these properties, the polymers and compositions thereof find application in a wide range of fields, including oilfield operations where they may be used for gas hydrate and/or corrosion inhibition. The attributes of the polymers lend themselves to other arts, including (but not limited to): other performance chemicals applications (*e.g.*, adhesives, agricultural chemicals, biocides, cleaning, coating, electronics, encapsulation, membrane, microelectronics, sealant, and sensor applications), and personal care applications. The polymers also may be used for the deposition of actives, like biocides and fragrances, across these applications segments.

### DESCRIPTION OF THE PRIOR ART

The extraction and fluid transport of oil and natural gas present many challenges. Of primary concern in this invention is the inhibition of corrosion and gas hydrate formation in the extraction pipeline. It is well known that the presence of water in the hydrocarbon-containing line can facilitate the formation of gas hydrate crystals and/or corrosion, which can block the conduit and/or compromise the integrity of the construction materials. Lower molecular weight hydrocarbon gases such as methane, ethane, propane, butane, and isobutane are especially prone to the formation of gas hydrates. Elevated pressures and low temperatures aide interactions between the dissolved hydrocarbon(s) and water. Additionally, corrosion can be accelerated when brine or acidified water (*i.e.*, containing dissolved hydrogen sulfide or carbon dioxide) is encountered. Such process conditions are frequently encountered, especially during deep sea and arctic drilling, causing these molecules to nucleate, crystallize, and produce gas hydrate crystals. The formation, persistence, and accumulation of gas hydrates during drilling and transport operations to the processing facility may result in large pressure drops and/or extensive cost and downtime if they impede fluid transport.

Methods have been developed to address these problems, and can be categorized into four general areas: (1) water removal from the transport line, (2) thermal approaches to maintain and/or create a temperature profile inside the transport line so that gas hydrate formation is unfavorable, (3) thermodynamic chemical (antifreeze compounds) addition to elevate the gas hydrate crystallization temperature, and (4) kinetic chemical addition to retard, delay, or slow gas hydrate nucleation kinetics and retard, delay, or slow their agglomeration after they form. However, all methods are prone to problems, such as the flammability and toxicity of methanol as a thermodynamic inhibitor and cost of insulation and dehydration. Thus, there is the need for improved methods of maintaining pipelines free of gas hydrate crystal and providing corrosion inhibition.

The prior art discloses kinetic inhibitors of gas hydrates, for which polymeric compositions have proved especially beneficial. Representative compositions include those disclosed in the following US Patents: 4,915,176; 5,420,370; 5,432,292; 5,639,925; 5,723,524; 6,028,233; 6,093,863; 6,096,815; 6,117,929; 6,451,891; and 6,451,892. Many of these compositions comprise cyclic ring members, such as lactam rings.

While useful, these materials have their limitations. For examples, the prior art teaches a trade-off between kinetic hydrate inhibition performance and cloud point temperature. For example, polyvinylpyrrolidone homopolymer, which contains a plurality of five-member lactam rings, possesses a cloud point temperature in excess of 100°C, but is a poor kinetic hydrate inhibitor. Heteropolymers of vinylpyrrolidone offer improved kinetic hydrate inhibition, but possess a lower cloud point than polyvinylpyrrolidone homopolymer. Furthermore, polyvinylpyrrolidone homopolymer is not an inhibitor for corrosion.

Polymeric gas hydrate inhibitors comprising a heterocyclic organic ring (*e.g.*, *N*-vinyl-2-pyrrolidone, *N*-vinyl-$\varepsilon$-caprolactam) and a noncyclic amide are taught in US patent 5,639,925. This patent discloses clathrate hydrate inhibitors for hydrocarbon-containing fluids, especially those fluids less than 45°C, and "preferably, the fluid is subjected to a temperature of lower than 40°F." In practice, the ability of the polymeric gas hydrate inhibitor to resist phase separation at higher temperatures (*i.e.*, a high cloud point) is important during many stages of fluid transport, *e.g.*, deep subterranean extraction and transport in topical waters. The '925 patent is silent on cloud point and corrosion inhibition, and how polymeric composition affects these two important properties.

*N*-vinyl formamide homopolymers or copolymers thereof are taught as gas hydrate inhibitors in WO 99/64717. The effects of reaction solvent on the properties of these hydrate inhibitors are not provided, nor is any discussion of corrosion inhibition described.

Specification for the reaction solvent is provided in US patent 6,451,891, wherein desired solvents include low molecular weight glycol ethers containing an alkoxy group having at least three carbon atoms. The gas hydrate inhibitors

claimed in that patent are not known to provide corrosion inhibition.

Dual corrosion- and gas hydrate inhibitors are the discussed in US patent 7,341,617. The polymeric compositions comprise quaternary alkylaminoalkyl/alkoxy esters and quaternary alkylaminoalkyl/alkoxy amides of dicarboxylic acids. There is no mention of *N*-vinyl formamide, and there is no benefit taught of the cloud point temperature of these compositions.

US patent application 2003/0018152 discloses a method for producing polymers with a solvent for monomers and a second, different solvent for the polymerization solvent. The method is suitable for the production of gas hydrate inhibition polymers. Polymeric corrosion inhibitors are not disclosed.

Inhibitors of clathrate hydrates are the object of US patent application 2006/0205603. The polymeric clathrate hydrate inhibitors possess a bimodal distribution in molecular weight of a water-soluble polymer. Again, this application does not reveal any advantage to corrosion inhibition.

Despite the advances in gas hydrate and corrosion inhibitors, there persists the need for compositions that combine these dual attributes, and especially those inhibitors that do not phase-separate at high fluid temperatures.

## SUMMARY OF THE INVENTION

The present invention, as defined in the claims, defines a new class of polymers derived from at least (A) *N*-vinyl formamide, one vinyl amide moiety or one acrylamide moiety, and (C) a reaction solvent capable of forming an adduct and having either a hydroxyl group or a thiol group, or blends thereof, which solvent is selected from the group consisting of ethanol, methanol, hydroxymethyl-2-caprolactam, N-hydroxyethyl-2-pyrrolidone, ethylene glycol, 2-butoxyethanol, methanethiol and ethanethiol; the polymer possessing a cloud point temperature greater than about 66°C, wherein the cloud point temperature is determined visually in a 1% w/w solution of the polymer in double distilled water, stirred at 200 rpm and heated at about 2°C/min. The polymers find application in a variety of fields, including, but not limited to: gas hydrate and corrosion inhibition, personal care (*e.g.* skin care, hair care), and delivery systems (*e.g.* biocides, fragrances) of enhanced deposition.

The disclosed polymers of the invention display a number of desirable properties, such as: gas hydrate induction times of about 24 hours or more at 4°C and 35 bar; and/or 7°C and 60 bar; exceptionally high cloud point temperatures of about 66°C or more, and corrosion inhibition. Especially preferred polymers have a cloud point temperature of 80°C or more, and most preferably 90°C.

In one embodiment of the invention, the polymers find use during oilfield operations and in oilfield compositions, where they may (a) inhibit and/or retard the formation of gas hydrates in a hydrocarbon pipeline, and/or (b) prevent corrosion of process equipment and/or fluid transport lines. The high cloud point temperatures of the discovered polymers makes them particularly attractive for these uses.

In a related embodiment, a method, as defined in the claims, is provided for inhibiting corrosion and gas hydrates in systems comprising a hydrocarbon-water composition.

## DETAILED DESCRIPTION OF THE INVENTION

As used herein, the following terms have the meanings set out below:

The term *copolymer,* designated by "-co-" in a polymer name, refers to a polymer that comprises two different repeating monomer units. The term *terpolymer,* designated by "-ter-" in a polymer name, refers to a polymer that comprises three different repeating monomer units

The term *free radical addition polymerization initiator* refers to a compound used in a catalytic amount to initiate a free radical addition polymerization. The choice of initiator depends mainly upon its solubility and its decomposition temperature.

The term *oilfield operation* is any activity related to the production or use of hydrocarbon-based fuels, such as exploring, discovering, drilling, extracting, delivering, and refining of oil and gas, as well as the termination and remediation of such operations.

The term *oilfield compositions* refers to compositions that are useful during oilfield operations. Oilfield compositions include anti-agglomerants, emulsifiers, de-emulsifiers, gas hydrate inhibitors, kinetic hydrate inhibitors, shale swelling inhibitors, and/or scale inhibitors.

The term *performance chemicals composition* refers to non-personal care compositions that serve a broad variety of applications, and include nonlimiting compositions such as: adhesives; agricultural, biocides, coatings, electronics, household-industrial-institutional (HI&I), inks, membranes, metal fluids, oilfield, paper, paints, plastics, printing, plasters, and wood-care compositions.

The term *personal care composition* refers to such illustrative non-limiting compositions as skin, sun, oil, hair, cosmetic, and preservative compositions, including those to alter the color and appearance of the skin. Potential personal care compositions include, but are not limited to, polymers for increased flexibility in styling, durable styling, increased humidity resistance for hair, skin, and color cosmetics, sun care water-proof/resistance, wear-resistance, and thermal protecting/enhancing compositions.
All percentages, ratio, and proportions used herein are based on a weight basis unless other specified.

Polymer Description

The invention relates to polymers that are derived from at least: *N*-vinyl formamide, one vinyl amide moiety or one acrylamide moiety, and a reaction solvent capable of forming an adduct as defined in claim 1. Such polymers have at least two repeating monomer units, the first being *N*-vinyl formamide and second being a vinyl amide moiety or a acrylamide moiety. The polymer may be a random, block, or alternating polymer.
As will be discussed in detail in later sections, such polymers display desirable properties that make them attractive to numerous application arts. In particular, the polymers exhibit gas hydrate inhibition, exceptionally high cloud points of about 66°C or more, more preferably 80°C or more, and most preferably 90°C or more, and corrosion inhibition. These properties find use in many performance chemicals and personal care compositions and uses thereof, especially during high temperature operations and applications where polymers may give evidence of partial or complete phase separation, for example, in oilfield operations and oilfield compositions.
It follows that the invention also provides methods of inhibiting gas hydrate formation and corrosion through the use of compositions comprising these polymers.
As described earlier, polymers of the invention derive in part from *N*-vinyl formamide, which is a polymerizable monomer that is well-known to those skilled in the art.
Polymers of the invention also are derived from at least one vinyl amide moiety or one acrylamide moiety. Of course, polymers may be synthesized to contain both moieties or additional polymerizable monomers.
Examples of exemplary cyclic vinyl amide moieties include, but are not limited to: *N*-vinyl-2-pyrrolidone, alkylated *N*-vinyl-2-pyrrolidones, *N*-vinyl-$\varepsilon$-caprolactam; *N*-vinyl-2-piperidone; *N*-vinyl-3-methyl pyrrolidone; *N*-vinyl-4-methyl pyrrolidone; *N*-vinyl-5-methyl pyrrolidone; *N*-vinyl-3-ethyl pyrrolidone; *N*-vinyl-3-butyl pyrrolidone; *N*-vinyl-3,3-dimethyl pyrrolidone; *N*-vinyl-4, 5-dimethyl pyrrolidone; *N*-vinyl-5,5-dimethyl pyrrolidone; *N*-vinyl-3,3,5-trimethyl pyrrolidone; *N*-vinyl-5-methyl-5-ethyl pyrrolidone; *N*-vinyl-3,4,5-trimethyl-3-ethyl pyrrolidone; *N*-vinyl-6-methyl-2-piperidone; *N*-vinyl-6-ethyl-2-piperidone; *N*-vinyl-3,5-dimethyl -2-piperidone; *N*-vinyl-4,4-dimethyl-2-piperidone; *N*-vinyl-6-propyl-2-piperidone; *N*-vinyl-3-octyl piperidone; *N*-vinyl-7-methyl caprolactam; *N*-vinyl-7-ethyl caprolactam; *N*-vinyl-4-isopropyl caprolactam; *N*-vinyl-5-isopropyl caprolactam; *N*-vinyl-4-butyl caprolactam; *N*-vinyl-5-butyl caprolactam; *N*-vinyl-4-butyl caprolactam; *N*-vinyl-5-*tert*-butyl caprolactam; *N*-vinyl-4-octyl caprolactam; *N*-vinyl-5-*tert*-octyl caprolactam; *N*-vinyl-4-nonyl caprolactam; *N*-vinyl-5-*tert*-nonyl caprolactam; *N*-vinyl-3,7-dimethyl caprolactam; *N*-vinyl-3,5-dimethyl caprolactam; *N*-vinyl-4,6-dimethyl caprolactam; *N*-vinyl-3,5,7-trimethyl caprolactam; *N*-vinyl-2-methyl-4-isopropyl caprolactam; and *N*-vinyl-5-isopropyl-7-methyl caprolactam.
Exemplary acyclic vinyl amide moieties include, but are not limited to: *N*-vinyl acetamide; *N*-propenylacetamide; *N*-(2-methylpropenyl) acetamide; *N*-vinyl formamide; *N*-(2,2-dichloro-vinyl)-propionamide; *N*-ethenyl acetamide; *N*-vinyl-*N*-methyl acetamide; and *N*-vinyl-*N,N*-propyl propionamide.
Likewise, cyclic acrylamide moieties include, but are not limited to: *N*-acryloyl pyrrolidone; *N*-acryloyl caprolactam; *N*-acryloyl piperidone; ethyl acryloyl pyrrolidone; methyl acryloyl pyrrolidone; ethyl acryloyl caprolactam; and methyl acryloyl caprolactam.
Finally, acyclic acrylamide moieties include, but are not limited to: acrylamide; *N*-ethylacrylamide; isopropyl acrylamide; *N*,*N*-diethylacrylamide; *N*-cyclohexylacrylamide, *N*-cyclopentylacrylamide; *N*-butoxymethylacrylamide; *N*,*N*-dibutylacrylamide; *N*-butylacrylamide; diacetoneacrylamide; *N*-(*N*,*N*-dimethylamino)ethyl acrylamide; *N*,*N*-diethylacrylamide; *N,N*-dimethylacrylamide; *N*-dodecylmethacrylamide; *N*-ethylacrylamide; *N*-ethylmethacrylamide; *N*-isopropylacrylamide; *N*-isopropylmethacrylamide; $\beta,\beta$-*N,N*-tetramethylacrylamide; N-methylolacrylamide; *N*-methyl acrylamide; *N*-octadecylacrylamide; *N*-octylacrylamide; *N*-phenylacrylamide; and trichloroacrylamide.
Since both *N*-vinyl formamide and described moieties are polymerizable units, there is no restriction on the ratio of these units in the final polymer. For example, the polymer may comprise a preponderance *N*-vinyl formamide or vinyl amide moiety/acrylamide moiety. In other words, the ratio of these two groups may range from about 1%- 99% *N*-vinyl formamide to 1%-99% vinyl amide moiety/acrylamide moiety. The exact ratio used will depend on a number of factors, as described later.
The polymerization between *N*-vinyl formamide and vinyl amide moiety/acrylamide moiety is performed in a reaction solvent having either a hydroxyl group or a thiol group, or blends comprising such solvents. These polymerization reaction solvents are employed because they are capable of being incorporated into the polymer as a solvent adduct during polymerization. Without being bound to specific theory, it is believed that such reaction solvents promote a greater

extension of polymer molecules in solution, improve the solubility of the polymer in aqueous solution, promote solubilization, and/or enhance polymer compatibility at high injection temperature (*i.e.*, not phase-separate). For example, when the solvent comprises a lactam, such as *N*-hydroxymethyl-2-caprolactam or *N*-hydroxyethyl-2-pyrrolidone, then the solvent adduct may assist in enhancing the polymer's properties, such as solubilization, or more specifically, gas hydrate inhibition.

Again, not to be bounded by theory, it is also believed that the solvent adduct may impart surfactant-like properties to cause an extended polymer conformation in solution, which presumably exposes more of the polymer molecule to interact with the hydrate crystal lattice. Such surfactancy may be imparted by selecting a polymerization reaction solvent having either a hydroxyl group or a thiol group and sufficient hydrophilic-to-hydrophobic character. Such polymerization reaction solvents include alcohols including the alkyl hydroxides (*e.g.*, methanol, ethanol, butanols, pentanols, and hexanols including cyclohexanol), and *N*-hydroxyalkyl lactams (*e.g.*, *N*-hydroxymethyl-2-caprolactam or *N*-hydroxyethyl-2-pyrrolidone).

It is believed that the contribution(s) from the solvent adduct to the polymer's properties increase(s) as the polymer molecular weight decreases, since the molar fraction of solvent adduct is greater. This aspect favors the customization of lower molecular weight polymers, since their properties may be adjusted by selecting monomer and solvent species. Nonetheless, it is recognized that the presence of one or more solvent adducts into a polymer confers new chemistry into the molecule, which also may be exploited in higher molecular weight polymers as well.

Further examples of suitable water-soluble reaction solvents include: alcohols (*e.g.*, butanol, 1-propanol, 2-propanol, propylene glycol, ethylene glycol), furans (*e.g.*, tetrahydrofuran), glycol ethers (*e.g.*, 2-methoxyethanol, 2-ethoxyethanol, 2-propoxyethanol, and 2-butoxyethanol), and thiols.

In the invention, when the solvent is an alcohol, it is selected from ethanol, methanol, hydroxymethyl-2-caprolactam and *N*-hydroxyethyl-2-pyrrolidone.

In the invention, when the solvent is a diol, it is ethylene glycol.

In the invention, when the solvent is a glycol ether, it is 2-butoxyethanol.

In the invention, when the solvent is a thiol it is one of methanethiol and ethanethiol.

In one embodiment of the invention, the polymerization reaction solvent also is employed for delivery. Less preferably, the polymerization is performed in one solvent, that solvent removed, and then the preferred solvent or blends of preferred solvents added.

The aforementioned polymers have a molecular weight from about 500 atomic mass units (amu) to about 5,000,000 amu, and the molecular weight may be chosen as appropriate for the end application. For example, polymers used in oilfield operations and compositions typically have molecular weights from about 500 amu to about 1,000,000 amu. Within the oilfield arts, polymers used to control the formation and/or growth of gas hydrates typically have a molecular weight from about 500 amu to 30,000 amu, whereas for salt thickening and shale swell inhibition higher molecular weight polymers, *i.e.*, approaching 1,000,000 amu, are preferred.

Preferred Polymers for Oilfield Applications

Polymers of the invention may be tailored for oilfield applications, where high injection temperature and gas hydrate inhibition are two primary properties of paramount importance.

As it will be seen in the Examples section, the cloud point of *N*-vinyl-ε-caprolactam homopolymer was measured to be 40°C. Discovered were polymers of substantially higher cloud point, created by polymerizing *N*-vinyl formamide and *N*-vinyl-ε-caprolactam in a adduct-forming solvent (*e.g.*, ethylene glycol), and by polymerizing *N*-vinyl formamide, *N*-vinyl-ε-caprolactam, and *N*-vinyl-2-pyrrolidone in a adduct-forming solvent (*e.g.*, ethylene glycol). Customization of the polymers is possible to one skilled in the art by selecting the moiety(ies) to be polymerized with *N*-vinyl formamide, choosing their ratio, and the reaction solvent. By doing so, cloud point temperatures or 66°C or higher were produced. Other polymers of the Examples possess a cloud point temperature of 80°C or more, while other polymers have a cloud point temperature of 90°C or more. These properties have created much customer interest for the use of these polymers, especially in oilfield operations and compositions.

The increase in cloud point temperature is due, in part, to the incorporation of *N*-vinyl formamide, the homopolymer of which has a cloud point temperature in excess of 99°C. However, most surprisingly, exceedingly high levels of *N*-vinyl formamide were not required in order to impart high cloud point temperature into the discovered polymers. Rather, the described high cloud point temperature polymers contain no more than 50% *N*-vinyl formamide.

For example, non-homopolymers especially suited to oilfield applications were created that did not have an observable cloud point (because the solutions first boiled). While the molecular weight of these non-homopolymers is modestly greater than the corresponding *N*-vinyl-ε-caprolactam homopolymer, the work of Jurek *et al.* (2008) indicated that molecular weight alone cannot significantly alter the cloud point. Instead, the increase of cloud point temperature is attributed to the incorporation of hydrophilic monomer units into the polymer backbone.

In addition to high cloud point, polymers of the invention provide excellent gas hydrate inhibition. Gas hydrate

induction times exceeding 48 h (and in one case exceeding 96 h) were measured for polymers based on *N*-vinyl-ε-caprolactam and *N*-vinyl formamide synthesized in ethylene glycol or 2-butoxyethanol; and polymers based on *N*-vinyl-ε-caprolactam, *N*-vinyl-2-pyrrolidone, and *N*-vinyl formamide synthesized in ethylene glycol. This result is surprising, as the incorporation of *N*-vinyl formamide, which is not known as a gas hydrate inhibitor, was expected to sacrifice gas hydrate inhibition. Thus, polymers of the invention that can be designed for combined high cloud point temperature and extended gas hydrate inhibition are expected to be useful in oilfield applications as well as other applications where one or both of these properties are desired.

## Polymer Synthesis

Methods to produce the polymers are known to one skilled in the art, and include free radical polymerization, emulsion polymerization, ionic chain polymerization, and precipitation polymerization, the methods of which are known to one skilled in the art. Free radical polymerization is a preferred polymerization method, and is described in "Decomposition Rate of Organic Free Radical Polymerization" by K.W. Dixon (section II in Polymer Handbook, volume 1, 4th edition, Wiley-Interscience, 1999).

Compounds capable of serving as a free radical addition polymerization initiator includes those materials known to function in the prescribed manner, and include the peroxo and azo classes of materials. Exemplary peroxo and azo compounds include, but are not limited to: acetyl peroxide; azo *bis*-(2-amidinopropane) *di*hydrochloride; azo *bis*-isobutyronitrile; 2,2'-azo *bis*-(2-methylbutyronitrile); benzoyl peroxide; *di-tert*-amyl peroxide; *di-tert*-butyl *di*perphthalate; butyl peroctoate; *tert*-butyl *di*cumyl peroxide; *tert*-butyl hydroperoxide; *tert*-butyl perbenzoate; *tert*-butyl permaleate; *tert-butyl* perisobutylrate; *tert-butyl* peracetate; *tert*-butyl perpivalate; *para*-chlorobenzoyl peroxide; cumene hydroperoxide; *di*acetyl peroxide; *di*benzoyl peroxide; *di*cumyl peroxide; *di*decanoyl peroxide; *di*lauroyl peroxide; *di*isopropyl peroxodicarbamate; *di*octanoyl peroxide; lauroyl peroxide; octanoyl peroxide; succinyl peroxide; and *bis*-(*ortho*-toluoyl) peroxide.

Also suitable to initiate the free-radical polymerization are initiator mixtures or redox initiator systems, including: ascorbic acid/iron(II) sulfate/sodium peroxodisulfate, *tert*-butyl hydroperoxide/sodium disulfite, and *tert*-butyl hydroperoxide/sodium hydroxymethanesulfinate.

The polymerized product comprises, by weight, from about 1% to 99% of *N*-vinyl formamide, and from about 99% to about 1% of the vinyl amide moiety or acrylamide moiety, recognizing that blends of the moieties may be used.

The final product can be analyzed by known techniques to characterize the product. Especially preferred are the techniques of $^{13}C$ nuclear magnetic resonance (NMR) spectroscopy, gas chromatography (GC), and gel permeation chromatography (GPC) in order to decipher polymer identity, residual monomer concentrations, polymer molecular weight, and polymer molecular weight distribution.

Nuclear magnetic resonance (NMR) spectroscopy is an especially preferred method to probe the polymerization product in terms of chemical properties such as monomeric composition, sequencing and tacticity. Analytical equipment suitable for these analyses include the Inova 400-MR NMR System by Varian Inc. (Palo Alto, CA). References broadly describing NMR include: Yoder, C.H. and Schaeffer Jr., C.D., Introduction to Multinuclear NMR, The Benjamin/Cummings Publishing Company, Inc., 1987; and Silverstein, R.M., et al., Spectrometric Identification of Organic Compounds, John Wiley & Sons, 1981.

Residual monomer levels can be measured by GC, which can be used to indicate the extent of reactant conversion by the polymerization process. GC analytical equipment to perform these tests are commercially available, and include the following units: Series 5880, 5890, and 6890 GC-FID and GC-TCD by Agilent Technologies, Inc. (Santa Clara, CA). GC principles are described in Modern Practice of Gas Chromatography, third edition (John Wiley & Sons, 1995) by Robert L. Grob and Eugene F. Barry.

GPC is an analytical method that separates molecules based on their hydrodynamic volume (or size) in solution of the mobile phase, such as hydroalcoholic solutions with surfactants. GPC is a preferred method for measuring polymer molecular weight distributions. This technique can be performed on known analytical equipment sold for this purpose, and include the TDAmax™ Elevated Temperature GPC System and the RImax™ Conventional Calibration System by Viscotek™ Corp. (Houston, TX). In addition, GPC employs analytical standards as a reference, of which a plurality of narrow-distribution polyethylene glycol and polyethylene oxide standards representing a wide range in molecular weight is the preferred. These analytical standards are available for purchase from Rohm & Haas Company (Philadelphia, PA) and Varian Inc. (Palo Alto, CA). GPC is described in the following texts: Schroder, E., et al., Polymer Characterization, Hanser Publishers, 1989; Billingham, N.C., Molar Mass Measurements in Polymer Science, Halsted Press, 1979; and Billmeyer, F., Textbook of Polymer Science, Wiley Interscience, 1984.

## Polymer Uses

As the polymers of the invention express many desirable properties, such as high cloud point, corrosion inhibition, and solubility potential, they may find application in many different arts, including (but not limited to): oilfield operations,

gas hydrate inhibition, other performance chemicals applications, and personal care use. Application of the polymers in these arts is enabled by a number of factors, such as the proper ratio of *N*-vinyl formamide to aforementioned vinyl amide moiety and/or acrylamide moiety, the choice of polymerization reaction solvent, polymer molecular weight, polymer molecular weight distribution, polymer delivery vehicle, and added formulary ingredients.

A preferred use of the polymers is in oilfield operations, especially as a gas hydrate inhibitor and/or corrosion inhibitor. Typical of such compounds, it may be desirable to formulate the polymers with additional ingredients to enhance their delivery and/or performance. Materials like biocides, corrosion inhibitors, emulsifiers, de-emulsifiers, defoamers, lubricants, rheology modifiers, and shale swelling inhibitors are examples of compounds that may be combined with the invention's polymers.

When employed as a gas hydrate inhibitor, compositions comprising the polymer are used in an amount of about 0.1% to about 3% by weight of the composition, *i.e.*, in admixture with the solvent system. The polymer inhibition concentration in the pipeline, *i.e.*, the aqueous phase, is from about 0.1% to 3% by weight.

Due in part to the wide range of potential polymerizable units and reaction solvents, the described polymers may provide benefits outside of oilfield operations. These benefits may include rheology control, de-emulsification, biocidal activity, shale-swelling inhibition, scale inhibition, solubilization, wax inhibition, and deposition of actives (such as biocides or fragrances). Consequently, the polymers are expected to be useful in other performance chemicals and personal care applications. For example, the polymers may be combined with ingredient typical for adhesive, agricultural, biocide, cleaning, coating, encapsulation, or membrane use.

With respect to personal care products, additional compounds of particular interest antioxidants, bronzing/self-tanning agents, colorants, defoamers, emollients, fragrances, humectants, insect repellants, lower monoalcohols, lower polyols, micro- and nano-particulate UV absorbants, moisturizers, pigments, preservatives, propellants, oils, surfactants, thickeners, water, and waxes.

**EXAMPLES**

Reference Example 1: Poly(95% N-vinyl-ε-caprolactam-co-5% *N*-vinyl formamide) in ethylene glycol.

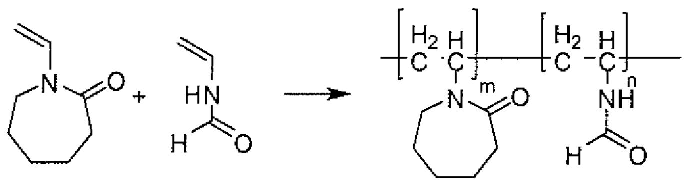

A first premix solution was prepared by stirring *N*-vinyl-ε-caprolactam (9.5 g) and *N*-vinyl formamide (0.5 g) in ethylene glycol (80 g). The reaction kettle was heated to 116°C under nitrogen purge. After reaching temperature, Trigonox® 121 was added and the mixture stirred for 15 minutes. A second premix was prepared by stirring *N*-vinyl-ε-caprolactam (85.5 g) and *N*-vinyl formamide (4.5 g) in ethylene glycol (70 g). Over a period of 3 hours this second premix was pumped into the reaction kettle containing the first premix solution, and simultaneously, 13 charges of Trigonox® 121 (0.375 g each charge) were added to the reactor every 15 minutes. After the last charge of Trigonox® 121 the reaction kettle was cooled to 105°C, at which point an additional Trigonox® 121 charge (0.375 g) was added into the reaction kettle. Thirty minutes later, another charge of Trigonox® 121 (0.375 g) was added to the reaction kettle and the temperature was held for 1 hour. Thereafter, the reaction kettle was allowed to cool to room temperature. A brown, viscous polymer was discharged from the reaction kettle.

The polymer was analyzed by $^{13}C$ nuclear magnetic resonance (NMR) spectroscopy (Inova 400-MR, Varian Inc.), which indicated that the two monomers polymerized. As expected, the comonomer weight ratio was around 95% *N*-vinyl-ε-caprolactam:5% *N*-vinyl formamide. The ethylene glycol solvent adduct the polymer product was about 15%, as indicated by $^{13}C$ NMR spectroscopy.

In addition, the residual monomer content in the product was analyzed by gas chromatography (GC-TCD Series 5880, Agilent Technologies), which indicated that the overall residual monomers content was less than 2% (w/w).

The polymer is a random, alternating, or block polymer. The structural subscripts "m" and "n" are integers equal to or greater than 1 such that the number of each monomer unit yields a polymer having a molecular weight between 500 amu and 5,000,000.

The weight-average molecular weight, cloud point, and gas hydrate induction time also were measured (described later).

Reference Example 2: Poly(80% *N*-vinyl-ε-caprolactam-co-20% *N*-vinyl formamide) in ethylene glycol

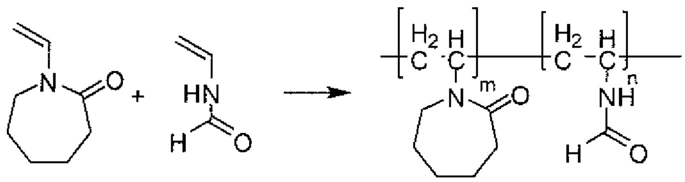

The method of Example 1 was repeated, but with the following changes. The first premix contained 8 g *N*-vinyl-ε-caprolactam and 2 g *N*-vinyl formamide in 80 g ethylene glycol. The second premix contained 72 g *N*-vinyl-ε-caprolactam and 18 g *N*-vinyl formamide in 70 g ethylene glycol. Again, a brown, viscous polymer was discharged from the reaction kettle.

The polymer is a random, alternating, or block polymer. The structural subscripts "m" and "n" are integers equal to or greater than 1 such that the number of each monomer unit yields a polymer having a molecular weight between 500 amu and 5,000,000.

The weight-average molecular weight, cloud point, and gas hydrate induction time also were measured (described later).

Example 3: Poly(60% *N*-vinyl-ε-caprolactam-co-40% *N*-vinyl formamide) in ethylene glycol

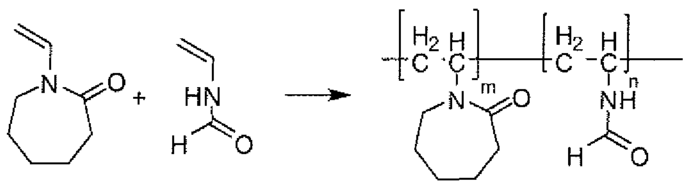

The method of Example 1 was repeated, but with the following changes. The first premix contained 6 g *N*-vinyl-ε-caprolactam and 4 g *N*-vinyl formamide in 80 g ethylene glycol. The second premix contained 54 g *N*-vinyl-ε-caprolactam and 36 g *N*-vinyl formamide in 70 g ethylene glycol. As before, a brown, viscous polymer was discharged from the reaction kettle.

The cloud point and gas hydrate induction time also were measured (described later).

The structural subscripts "m" and "n" are integers equal to or greater than 1 such that the number of each monomer unit yields a polymer having a molecular weight between 500 amu and 5,000,000.

The polymer is a random, alternating, or block polymer.

Example 4: Poly(50% *N*-vinyl-ε-caprolactam-co-50% *N*-vinyl formamide) in ethylene glycol.

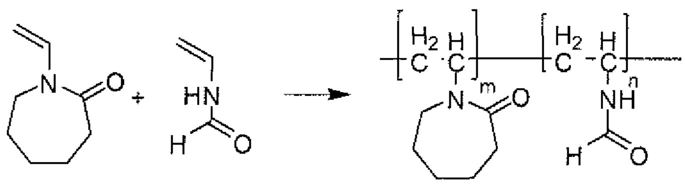

The method of Example 1 was repeated, but with the following changes. The first premix contained 5 g *N*-vinyl-ε-caprolactam and 5 g *N*-vinyl formamide in 80 g ethylene glycol. The second premix contained 45 g *N*-vinyl-ε-caprolactam and 45 g *N*-vinyl formamide in 70 g ethylene glycol. Once again, a brown, viscous polymer was discharged from the reaction kettle.

The polymer was analyzed by $^{13}C$ NMR spectroscopy (Inova 400-MR, Varian Inc.), which indicated that the two monomers polymerized. As expected, the comonomer weight ratio was around 50% *N*-vinyl-ε-caprolactam:50%

*N*-vinyl formamide.

In addition, the residual monomer content in the product was analyzed by gas chromatography (GC-TCD Series 5880, Agilent Technologies), which indicated that the overall residual monomers content was less than 2% (w/w).

The polymer is a random, alternating, or block polymer. The structural subscripts "m" and "n" are integers equal to or greater than 1 such that the number of each monomer unit yields a polymer having a molecular weight between 500 amu and 5,000,000,

The weight-average molecular weight, cloud point, and gas hydrate induction time also were measured (described later).

Reference Example 5: Poly(95% *N*-vinyl-ε-caprolactam-co-5% *N*-vinyl formamide) in 2-butoxyethanol.

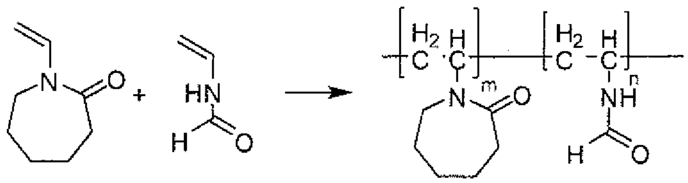

A feed solution was prepared by stirring *N*-vinyl-ε-caprolactam (95 g) and *N*-vinyl formamide (5 g) in 2-butoxyethanol (100 g). This feed solution was fed to a reaction kettle, which was heated to 150°C under nitrogen purge and then held at this temperature for 30 minutes. Then, Trigonox® B was added, and simultaneously, the remaining feed solution was fed into the reaction kettle over a period of 2 hours. After 1 hour, additional Trigonox® B was added to the reaction kettle. Once all feed solution had entered the reaction kettle (*i.e.*, after 2 hours), then four charges of Trigonox® B were added to the reaction kettle every 1 hour. After the final charge, the reaction kettle was maintained at 150°C for an additional 1 hour, and then allowed to cool to room temperature. A brown, viscous polymer was discharged from the reaction kettle.

The polymer was analyzed by $^{13}C$ NMR spectroscopy (Inova 400-MR, Varian Inc.), which indicated that the two monomers polymerized. As expected, the comonomer weight ratio was around 95% *N*-vinyl-ε-caprolactam:5% *N*-vinyl formamide.

The polymer is a random, alternating, or block polymer. The structural subscripts "m" and "n" are integers equal to or greater than 1 such that the number of each monomer unit yields a polymer having a molecular weight between 500 amu and 5,000,000.

The weight-average molecular weight, cloud point, and gas hydrate induction time also were measured (described later).

Example 6: Poly(80% *N*-vinyl-ε-caprolactam-co-20% *N*-vinyl formamide) in 2-butoxyethanol

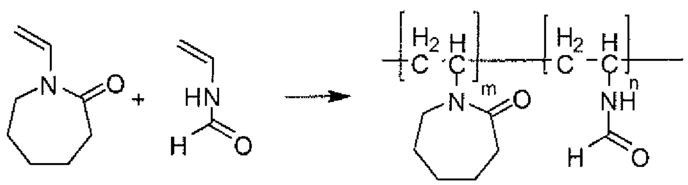

The method of Example 5 was repeated, but with the following changes. The feed solution contained 80 g *N*-vinyl-ε-caprolactam and 20 g *N*-vinyl formamide in 100 g 2-butoxyethanol. A brown, viscous polymer was discharged from the reaction kettle.

The weight-average molecular weight and gas hydrate induction time also were measured (described later). The polymer is a random, alternating, or block polymer. The structural subscripts "m" and "n" are integers equal to or greater than 1 such that the number of each monomer unit yields a polymer having a molecular weight between 500 amu and 5,000,000.

Example 7: Poly(50% *N*-vinyl-ε-caprolactam-ter-20% *N*-vinyl-2-pyrrolidone-ter-30% *N*-vinyl formamide) in ethylene glycol

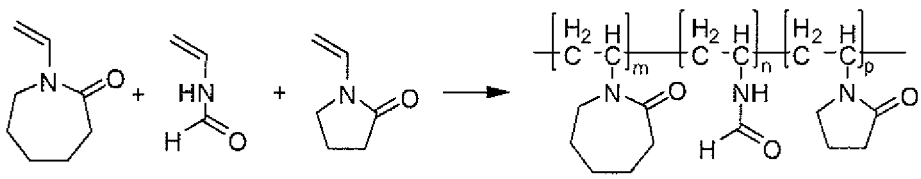

A first premix solution was prepared by stirring *N*-vinyl-ε-caprolactam (5 g), *N*-vinyl-2-pyrrolidone (2 g), and *N*-vinyl formamide (3 g) in ethylene glycol (80 g). The reaction kettle was heated to 116°C under nitrogen purge. After reaching temperature, Trigonox® 121 (0.375 g) was added and the mixture stirred for 15 minutes. A second premix was prepared by stirring *N*-vinyl-ε-caprolactam (45 g), *N*-vinyl-2-pyrrolidone (18 g), and *N*-vinyl formamide (27 g) in ethylene glycol (70 g). Over a period of 3 hours this second premix was pumped into the reaction kettle containing the first premix solution, and simultaneously, 13 shots of Trigonox® 121 (0.375 g each charge) were added to the reactor every 15 minutes. After the last charge of Trigonox® 121 (0.375 g) the reaction kettle was cooled to 105°C, at which point Trigonox® 121 (0.375 g) was added into the reaction kettle. Thirty minutes later, another charge of Trigonox® 121 (0.375 g) was added to the reaction kettle and the temperature was held for 1 hour. Thereafter, the reaction kettle was allowed to cool to room temperature. A brown, viscous polymer was discharged from the reaction kettle.

The structural subscripts "m," "n," and "p" are integers equal to or greater than 1 such that the number of each monomer unit yields a polymer having a molecular weight between 500 amu and 5,000,000.

The cloud point and gas hydrate induction time also were measured (described later). The polymer is a random, alternating, or block polymer.

Example 8: Poly(50% *N*-vinyl-ε-caprolactam-ter-30% *N*-vinyl-2-pyrrolidone-ter-20% *N*-vinyl formamide) in ethylene glycol

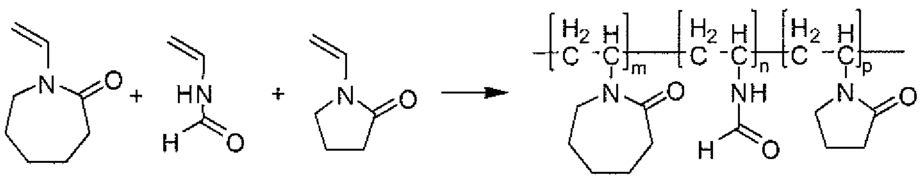

The method of Example 7 was repeated, but with the following changes. The first premix contained 5 g *N*-vinyl-ε-caprolactam, 3 g *N*-vinyl-2-pyrrolidone, and 2 g *N*-vinyl formamide in 80 g ethylene glycol. The second premix contained 45 g *N*-vinyl-ε-caprolactam, 27 g *N*-vinyl-2-pyrrolidone, and 18 g *N*-vinyl formamide in 70 g ethylene glycol. A brown, viscous polymer was discharged from the reaction kettle.

The polymer was analyzed by $^{13}C$ NMR (Inova 400-MR, Varian Inc.), which indicated that the monomers did polymerized, and the weight monomer ratio was 20% *N*-vinyl formamide: 80% vinyl caprolactam/vinyl pyrrolidone. The solvent adduct in the product was about 2% - 3% (w/w), as indicated by $^{13}C$ NMR spectroscopy.

In addition, the residual monomer content in the product was analyzed by GC (GC-TCD Series 5880, Agilent Technologies), which indicated that the overall residual monomers content was less than 0.5% (w/w).

The polymer is a random, alternating, or block polymer. The structural subscripts "m," "n," and "p" are integers equal to or greater than 1 such that the number of each monomer unit yields a polymer having a molecular weight between 500 amu and 5,000,000.

The weight-average molecular weight, cloud point and gas hydrate induction time also were measured (described later).

Example 9: Poly(50% *N*-vinyl-ε-caprolactam-ter-45% *N*-vinyl-2-pyrrolidone-ter-5% *N*-vinyl formamide) in ethylene glycol

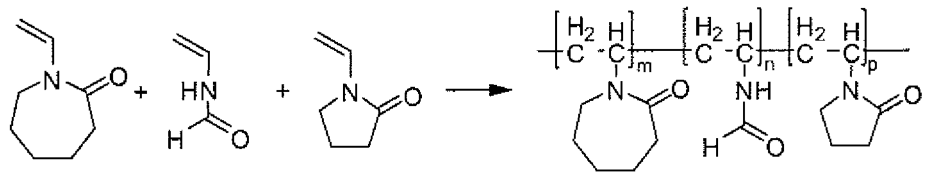

The method of Example 7 was repeated, but with the following changes. The first premix contained 5 g *N*-vinyl-ε-caprolactam, 4 g *N*-vinyl-2-pyrrolidone, and 0.5 g *N*-vinyl formamide in 80 g ethylene glycol. The second premix contained 45 g *N*-vinyl-ε-caprolactam, 36 g *N*-vinyl-2-pyrrolidone, and 4.5 g *N*-vinyl formamide in 80g ethylene glycol. A brown, viscous polymer was discharged from the reaction kettle.

The polymer is a random, alternating, or block polymer. The structural subscripts "m," "n," and "p" are integers equal to or greater than 1 such that the number of each monomer unit yields a polymer having a molecular weight between 500 amu and 5,000,000.

Method 1: Measurement of weight-average molecular weight.

The following GPC method was used to analyze the molecular weight distributions of the polymeric products of this invention:

1. A GPC mobile phase was prepared of 50% methanol:50% distilled water with 0.4 M lithium nitrate buffered to pH 9 using 0.1 M 2-amino-2-hydroxymethyl-propane-1,3-diol (tris).
2. A 0.15% solution of the polymerization product was made in the GPC mobile phase and mixed on a rotating wheel at about 20 rpm until clear.
3. The dissolved solution was filtered through a 0.45 μm polyvinylidene fluoride filter (Millex® HV, Millipore Corp., Billerica, MA).
4. The GPC system was equipped with a 515 HPLC pump (Waters Corp., Milford, MA), a Waters 2414 differential refractive index detector (Waters Corp.), and a two-column set (Toro Haas G3000, and Shodex KB803) operated at 30°C.
5. Polyethylene glycol (PEG) and polyethylene oxide (PEO) standards were injected as molecular weight references both before and after sample analyses. Six PEG standards were used: 194; 640; 1,080; 4,120; 11,840; 22,800 amu (Varian Inc., Palo Alto, CA). Five PEO standards were used: 43,000; 101,000; 540,000; and 879,000 amu (Rohm & Haas Company, Philadelphia, PA), and 1,345,000 amu (Varian Inc., Palo Alto, CA).
6. After analyzing the analytical references, the polymerization products were injected and evaluated in terms of weight-average molecular weight, $\langle M_w \rangle$, and polydispersity index (PDI), defined as:

$$\mathrm{PDI} = \frac{\langle M_w \rangle}{\langle M_n \rangle}$$

where $\langle M_n \rangle$ is the number average molecular weight.

Examples 10-16

Method 1 was employed to measure $\langle M_w \rangle$ and PDI for the polymerization products of Reference Examples 1 and 5 and Examples 4, 6 and 8.

The weight-average molecular weights were found to vary from 2,000 amu to about 15,000 amu, and the polydispersity indexes ranged from 2.2 to 6.0 (Table 1).

From $\langle M_w \rangle$, the molecular weights of the specific monomer units, and the polymer compositions, the values of structural subscripts "m", "n", and "p" can be determined. For example, the polymer of Example 8 comprises on the order of 30 *N*-vinyl-ε-caprolactam units, 23 *N*-vinyl-2-pyrrolidone units, and 24 *N*-vinyl formamide units.

Table 1: Weight-average molecular weights for compositions of Reference Examples 1 & 5 and Examples 4, 6 & 8.

| Example | composition | chemistry (weight percent) | $\langle M_w \rangle$ (amu) | PDI |
|---|---|---|---|---|
| 10 | | 100 VCL:0 NVF in EG | 2,000 | 2.2 |
| 11 | Ref. Example 1 | 95 VCL:5 NVF in EG | 4,400 | 4.2 |

(continued)

| Example | composition | chemistry (weight percent) | ⟨$M_w$⟩ (amu) | PDI |
|---|---|---|---|---|
| 12 | Example 4 | 50 VCL:50 NVF in EG | 12,000 | 3.6 |
| 13 | | 0 VCL:100 NVF in EG | 15,000 | 3.0 |
| 14 | Ref. Example 5 | 95 VCL:5 NVF in BGE | 5,320 | 6.0 |
| 15 | Example 6 | 80 VCL:20 NVF in BGE | 6,310 | 4.2 |
| 16 | Example 8 | 50 VCL:30 VP:20 NVF in EG | 8,460 | 3.4 |

VCL: *N*-vinyl-ε-caprolactam
NVF: *N*-vinyl formamide
VP: *N*-vinyl-2-pyrrolidone
EG: ethylene glycol
BGE: 2-butoxyethanol

Method 2: Cloud point measurement

The following method was used to measure the cloud point temperature:

1. A 1% (w/w) solution of the polymerization product was prepared in double distilled water in a 500 mL glass beaker. A Teflon® coated magnetic stir bar was placed in the beaker and rotated at about 200 rpm. A clear solution was produced.

2. The beaker as placed on a heating stir plate. The solution was stirred at about 200 rpm and heated at about 2°C/min.

3. A thermocouple was placed in the beaker about 2 cm from the beaker wall and about 4 cm from the beaker bottom.

4. The solution was visually observed during heating. The cloud point temperature was indicated by the first indication of hazy (*i.e.*, not clear) solution.

Examples 17-26

Method 2 was employed to measure the cloud point temperatures for the polymerization products of Reference Examples 1, 2 & 5 and Examples 3, 4 and 7-9.

The cloud points was found to range from 40°C to greater than 99°C (*i.e.*, solution boiled first), and were dependent on the selection of the reactants (Table 2).

Table 2: Cloud points for compositions of Reference Examples 1, 2 & 5 and Examples 3, 4, 7-9.

| Example | composition | chemistry (weight percent) | cloud point (°C) |
|---|---|---|---|
| 17 | | 100VCL:0NVF in EG | 40 |
| 18 | Ref. Example 1 | 95VCL:5NVF in EG | 40 |
| 19 | Ref. Example 2 | 80VCL:20 NVF in EG | 42 |
| 20 | Example 3 | 60VCL:40NVF in EG | 84 |
| 21 | Example 4 | 50VCL:50NVF in EG | >99 |
| 22 | | 0VCL: 100NVF in EG | >99 |
| 23 | Ref Example 5 | 95VCL:5NVF in BGE | 40 |
| 24 | Example 7 | 50 VCL:20 VP: 30 NVF in EG | >99 |
| 25 | Example 8 | 50 VCL:30 VP:20 NVF in EG | 89 |
| 26 | Example 9 | 50 VCL:45 VP:5 NVF in EG | 66 |

VCL: *N*-vinyl-ε-caprolactam
NVF: *N*-vinyl formamide
VP:*N*-vinyl-2-pyrrolidone
EG: ethylene glycol
BGE: 2-butoxyethanol

Method 3: Measurement of kinetic gas hydrate inhibition

The following steps were executed to measure the kinetic gas hydrate inhibition of polymerization products of this invention:

1. A 500 mL, 316 stainless steel autoclave vessel, equipped with a thermostated cooling jacket, sapphire window, inlet and outlet ports, platinum resistance thermometer (PRT), and a magnetic stirring pellet was selected. The autoclave was rated for use between -25°C to 400°C. Temperature and pressure data were recorded by a thermocouple and pressure transducer, respectively, and recorded by computer data acquisition software. The cell contents were visually monitored by a horoscope video camera connected to a time lapsed video recorder.
2. The rig was cleaned using prior to running blank or test solutions:

    a. An air drill with a wet emery-paper buffer head was used to passivate the interior stainless steel surface wall of the rig.
    b. The vessel was then rinsed several times with double distilled water and dried with lint-free tissue.

3. Approximately 200 g of gas hydrate inhibitor solution, made in double-distilled water, were added to the rig to produce a defined concentration (*e.g.*, 0.5%, 0.6%, 0.75%). The rig top was replaced and tightened.
4. The solution was stirred by a magnetic stirrer at 500 rpm.
5. Then, the autoclave was purged with an experimental hydrocarbon test mixture (Green Canyon Gas) (Table 3) for 60 seconds.
6. The system was pressurized to a defined pressure (*e.g.*, 35 bar, 60 bar) at room temperature.
7. After pressurization, the temperature was reduced from room temperature to a defined chill temperature (*e.g.*, 4°C, 7°C) (see step 11). The reactor pressure was maintained with Green Canyon Gas as the solution temperature was reduced.
8. The pressure and temperature data logging devices were activated.
9. The rig was maintained at the defined chill temperature and pressure until gas hydrates were detected.
10. Hydrate formation in the rig was determined by any one of three indicators: (1) visual detection of hydrate crystals (*i.e.*, non-clear solution), (2) a decrease in vessel pressure due to gas uptake by the solution, or (3) an increase in solution temperature created by the exothermic gas hydrate reaction.
11. A commercial software package, pvtsim (Calsep A/S, Lyngby, Denmark) was used to predict the Green Canyon Gas equilibrium melting temperature. For test pressures of 35 bar and 60 bar, the equilibrium melting temperatures are about 13.5°C and 17.3°C, respectively. The kinetic gas hydrate inhibition tests were conducted 35 bar and 4°C; and 60 bar and 7°C in order to create subcooling temperatures of 9.5°C and 10.3°C, respectively. (Subcooling temperature is the difference between the equilibrium melting temperature and the experimental fluid temperature.)

Table 3: Composition of the experimental hydrocarbon gas mixture composition.

| **component** | **amount (molar percent)** |
|---|---|
| nitrogen | 0.39 |
| methane | 87.26 |
| ethane | 7.57 |
| propane | 3.10 |
| iso-butane | 0.49 |
| *N*-butane | 0.79 |
| iso-pentane | 0.20 |
| *N*-pentane | 0.20 |
| **total** | **100.00** |

Gas hydrate inhibition efficiency is proportional to the induction time, which is the time from the start of the run (*viz.*, step 8) to the time when gas hydrates are detected (*viz.*, step 10).

Examples 27-36

The induction time was measured using Method 3 for two blank solutions (*i.e.*, containing no gas hydrate inhibitor) and the compositions of Example 1-8.

These polymers exhibit excellent gas hydrate inhibition, as the induction times were in excess of 48 hours (Table 4).

Table 4: Gas hydrate induction times for gas hydrate inhibitors of Reference Example 5 and Examples 3, 4 and 6-8.

| Example | inhibitor | chemistry (weight percent) | pressure (bar) | test conditions subcooling temperature (°C) | use level (%) | average induction time (h) |
|---|---|---|---|---|---|---|
| 27 | none | blank | 60 | 10.3 | 0 | 0 |
| 28 | none | blank | 35 | 9.5 | 0 | 0 |
| 29 | Example 3 | 60 VCL: 40 NVF in EG | 60 | 10.3 | 0.6 | >48 |
| 30 | Example 4 | 50 VCL: 50 NVF in EG | 60 | 10.3 | 0.6 | >48 |
| 31 | Ref Example 5 | 95 VCL: 5 NVF in BGE | 60 | 10.3 | 0.6 | >48 |
| 32 | Ref Example 5 | 95VCL:5NVF in BGE | 35 | 9.5 | 0.5 | >48 |
| 33 | Example 6 | 80 VCL:20 NVF in BGE | 35 | 9.5 | 0.6 | >48 |
| 34 | Example 7 | 50 VCL:20 VP: 30 NVF in EG | 60 | 10.3 | 0.75 | >48 |
| 35 | Example 8 | 50 VCL:30 VP: 20 NVF in EG | 60 | 10.3 | 0.6 | >48 |
| 36 | Example 8 | 50 VCL:30 VP: 20 NVF in EG | 60 | 10.3 | 0.75 | >96 |

VCL: *N*-vinyl-ε-caprolactam
NVF: *N*-vinyl formamide
VP: *N*-vinyl-2-pyrrolidone
EG: ethylene glycol
BGE: 2-butoxyethanol

Method 4: Evaluation of corrosion inhibition

Corrosion inhibition tests were conducted under dynamics condition of high shear stress using the following method:

1. The corrosion test apparatus consisted of a 100-mL jacket test vessel fitted with gas inlet and outlet ports, and a rotating electrode connected to an electrochemical test system.
2. The test vessel was filled with 100 g of a test solution consisting of 3% NaCl in double distilled water, or 3% NaCl solution with 50 parts-per-million (ppm) corrosion inhibitor.
3. Then, the test solution was purged with nitrogen at least for 30 minutes to remove oxygen. At the same time, the temperature of the test solution was heated to 30°C.
4. A cylindrical, 1018-carbon steel coupon was degreased by submersing it into hexane for 5 minutes, followed by acetone submersion for 5 minutes. The coupon was removed, dried, and then polished using 1,200-grade silicon carbide paper, and then rinsed in double distilled water. Afterward, it was dried in an oven at 35°C.
5. This pretreated metal coupon was mounted on the shaft of the rotating cylinder electrode and inserted into the test solution. The electrode rotated at 1000 rpm for a total time of approximately 2 hours.
6. A linear polarization resistance technique was used to determine the corrosion rate (CR), and data were collected at 30-minute intervals for up to 2 hours.

7. The inhibitory efficiency (IE) was determined using the following equation:

$$IE = \frac{CR_{\text{no inhibitor}} - CR_{\text{w. inhibitor}}}{CR_{\text{no inhibitor}}} \times 100$$

where:

$CR_{\text{no inhibitor}}$ = corrosion rate in absence of an inhibitor
$CR_{\text{w. inhibitor}}$ = corrosion rate in the presence of the inhibitor

Examples 37-39

Method 4 was used to characterize a composition of the current invention.

Excellent corrosion inhibition was measured over a wide range of *N*-vinyl-ε-caprolactam:*N*-vinyl formamide ratio (Table 5).

Table 5: Corrosion inhibitory efficiencies for *N*-vinyl-ε-caprolactam:*N*-vinyl formamide copolymers.

| Example | inhibitor | chemistry (weight percent) | average inhibitory efficiency |
|---|---|---|---|
| 37 | none | blank | 0% |
| 38 | Ref Example 1 | 95 VCL:5 NVF in EG | 82% |
| 39 | Example 4 | 50 VCL:50 NVF in EG | 92% |

VCL: *N*-vinyl-ε-caprolactam
NVF: *N*-vinyl formamide
EG: ethylene glycol

The invention has been described in detail with particular reference to preferred embodiments thereof, but it will be understood that variations and modifications can be effected.

**Claims**

1. A polymer derived from at least (A) *N*-vinyl formamide, (B) one vinyl amide moiety or one acrylamide moiety, and (C) a reaction solvent capable of forming an adduct and having either a hydroxyl group or a thiol group, or blends thereof, which solvent is selected from the group consisting of ethanol, methanol, hydroxymethyl-2-caprolactam, N-hydroxyethyl-2-pyrrolidone, ethylene glycol, 2-butoxyethanol, methanethiol and ethanethiol; the polymer possessing a cloud point temperature greater than 66°C, wherein the cloud point temperature is determined visually in a 1% w/w solution of the polymer in double distilled water, stirred at 200 rpm and heated at about 2°C/min.

2. The polymer of claim 1 wherein said vinyl amide moiety and said acrylamide moiety are selected from the group consisting of: *N*-vinyl pyrrolidone; *N*-vinyl piperidone; *N*-vinyl caprolactam; *N*-vinyl-3-methyl pyrrolidone; *N*-vinyl-4-methyl pyrrolidone; *N*-vinyl-5-methyl pyrrolidone; *N*-vinyl-3-ethyl pyrrolidone; *N*-vinyl-3-butyl pyrrolidone; *N*-vinyl-3,3-dimethyl pyrrolidone; *N*-vinyl-4,5-dimethyl pyrrolidone; *N*-vinyl-5,5-dimethyl pyrrolidone; *N*-vinyl-3,3,5-trimethyl pyrrolidone; *N*-vinyl-5-methyl-5-ethyl pyrrolidone; *N*-vinyl-3,4,5-trimethyl-3-ethyl pyrrolidone; *N*-vinyl-6-methyl-2-piperidone; *N*-vinyl-6-ethyl-2-piperidone; *N*-vinyl-3,5-dimethyl-2-piperidone; *N*-vinyl-4,4-dimethyl-2-piperidone; *N*-vinyl-6-propyl-2-piperidone; *N*-vinyl-3-octyl piperidone; *N*-vinyl-7-methyl caprolactam; *N*-vinyl-7-ethyl caprolactam; *N*-vinyl-4-isopropyl caprolactam; *N*-vinyl-5-isopropyl caprolactam; *N*-vinyl-4-butyl caprolactam; *N*-vinyl-5-butyl caprolactam; *N*-vinyl-4-butyl caprolactam; *N*-vinyl-5-*tert*-butyl caprolactam; *N*-vinyl-4-octyl caprolactam; *N*-vinyl-5-*tert*-octyl caprolactam; *N*-vinyl-4-nonyl caprolactam; *N*-vinyl-5-*tert*-nonyl caprolactam; *N*-vinyl-3,7-dimethyl caprolactam; *N*-vinyl-3,5-dimethyl caprolactam; *N*-vinyl-4,6-dimethyl caprolactam; *N*-vinyl-3,5,7-trimethyl caprolactam; *N*-vinyl-2-methyl-4-isopropyl caprolactam; *N*-vinyl-5-isopropyl-7-methyl caprolactam; *N*-vinyl formamide; *N*-vinyl acetamide, *N*-(2,2-dichloro-vinyl)-propionamide; *N*-ethenyl acetamide; cis-*N*-propenyl acetamide; *N*-vinyl-*N*-methyl acetamide; *N*-vinyl-*N*,*N*-propyl propionamide; *N*-acryloyl piperidone, *N*-acryloyl pyrrolidone, ethyl acryloyl pyrrolidone, methyl acryloyl pyrrolidone, *N*-acryloyl caprolactam, ethyl acryloyl caprolactam, methyl acryloyl caprolactam, *N*-cyclohexylacrylamide, *N*-cyclopentylacrylamide, acrylamide, *N*-butoxymethylacryl amide; *N*,*N*-dibutylacrylamide; *N*- butylacrylamide; diacetoneacrylamide; *N*-(*N*,*N*-dimethylamino)-ethyl acrylamide; *N*,*N*-diethylacrylamide; *N*,*N*-dimethylacrylamide; *N*-dodecylmethacrylamide; *N*-ethylacrylamide; *N*-ethylmethacrylamide; *N*-isopropylacrylamide; *N*-isopropylmethacrylamide; β,β-*N*,*N*-tetramethylacrylamide; *N*-methylolacrylamide; *N*-methyl acrylamide; *N*-octadecylacryl amide; *N*-octylacrylamide; *N*-phenylacrylamide; trichloroacrylamide; and blends thereof.

**3.** The polymer of claim 1 that comprises, by weight, 1%-99% of said *N*-vinyl formamide and 1 %-99% of said vinyl amide moiety or said acrylamide moiety.

**4.** The polymer of claim 1 having a molecular weight from 500 amu to 5,000,000 amu.

**5.** A composition comprising the polymer of claim 1.

**6.** The composition of claim 5 that further comprises an ingredient selected from the group consisting of: biocides, corrosion inhibitors, emulsifiers, de-emulsifiers, defoamers, lubricants, rheology modifiers, shale swelling inhibitors, solvents, and blends thereof.

**7.** The use of the composition of claim 5 to prevent, retard, and/or reduce the formation and/or growth of gas hydrates, or prevent, retard, and/or reduce corrosion during the transport of a fluid comprising water and a hydrocarbon through a conduit.

**8.** A method for preventing, retarding, and/or reducing the formation and/or growth of gas hydrates or for preventing, retarding, and/or reducing corrosion during the transport of a fluid comprising water and a hydrocarbon through a conduit which comprises the addition into an aqueous phase of a composition as defined in claim 5.

**9.** The method of claim 8, polymer of claim 1 or composition of claim 5, wherein said polymer comprises *N*-vinyl formamide and *N*-vinyl-ε-caprolactam, synthesized in ethylene glycol and/or 2-butoxyethanol.

**10.** The method, polymer or composition of claim 9 wherein said polymer further comprises *N*-vinyl-2-pyrrolidone.

**11.** The polymer of claim 10 that comprises about 20% *N*-vinyl formamide, about 50% *N*-vinyl-ε-caprolactam, and about 30% *N*-vinyl-2-pyrrolidone.

**12.** A composition according to claim 5 which is a personal care composition or a performance chemicals composition.

## Patentansprüche

**1.** Polymer, das von zumindest (A) N-Vinylformamid, (B) einer Vinylamid-Gruppierung oder einer Acrylamid-Gruppierung und (C) einem Reaktionslösungsmittel, das in der Lage ist, ein Addukt zu bilden, und das entweder eine Hydroxylgruppe oder eine Thiolgruppe oder Gemische davon aufweist, abgeleitet ist, wobei das Lösungsmittel aus der aus Ethanol, Methanol, Hydroxymethyl-2-caprolactam, N-Hydroxyethyl-2-pyrrolidon, Ethylenglykol, 2-Butoxyethanol, Methanthiol und Ethanthiol bestehenden Gruppe ausgewählt ist; wobei das Polymer eine Trübungspunkt-Temperatur über 66 °C aufweist, wobei die Trübungspunkt-Temperatur visuell in einer 1-gew.-%-igen Lösung des Polymers in zweifach destilliertem Wasser, die mit 200 U/min gerührt und mit etwa 2 °C/min erhitzt wird, bestimmt wird.

**2.** Polymer nach Anspruch 1, wobei die Vinylamid-Gruppierung und die Acrylamid-Gruppierung aus der aus Folgendem bestehenden Gruppe ausgewählt sind: N-Vinylpyrrolidon, N-Vinylpiperidon, N-Vinylcaprolactam; N-Vinyl-3-methylpyrrolidon, N-Vinyl-4-methylpyrrolidon, N-Vinyl-5-methylpyrrolidon, N-Vinyl-3-ethylpyrrolidon, N-Vinyl-3-butylpyrrolidon, N-Vinyl-3,3-dimethylpyrrolidon, N-Vinyl-4,5-dimethylpyrrolidon, N-Vinyl-5,5-dimethylpyrrolidon, N-Vinyl-3,3,5-trimethylpyrrolidon, N-Vinyl-5-methyl-5-ethylpyrrolidon, N-Vinyl-3,4,5-trimethyl-3-ethylpyrrolidon, N-Vinyl-6-methyl-2-piperidon, N-Vinyl-6-ethyl-2-piperidon, N-Vinyl-3,5-dimethyl-2-piperidon, N-Vinyl-4,4-dimethyl-2-piperidon, N-Vinyl-6-propyl-2-piperidon, N-Vinyl-3-octylpiperidon, N-Vinyl-7-methylcaprolactam, N-Vinyl-7-ethylcaprolactam, N-Vinyl-4-isopropylcaprolactam, N-Vinyl-5-isopropylcaprolactam, N-Vinyl-4-butlycaprolactam, N-Vinyl-5-butyl-caprolactam, N-Vinyl-4-butylcaprolactam, N-Vinyl-5-tert-butylcaprolactam, N-Vinyl-4-octylcaprolactam, N-Vinyl-5-tert-octylcaprolactam, N-Vinyl-4-nonylcaprolactam, N-Vinyl-5-tert-nonylcaprolactam, N-Vinyl-3,7-dimethylcaprolactam, N-Vinyl-3,5-dimethylcaprolactam, N-Vinyl-4,6-dimethylcaprolactam; N-Vinyl-3,5,7-trimethylcaprolactam, N-Vinyl-2-methyl-4-isopropylcaprolactam, N-Vinyl-5-isopropyl-7-methylcaprolactam, N-Vinylformamid, N-Vinylacetamid, N-(2,2-Dichlorvinyl)-propionamid, N-Ethenylacetamid, cis-N-Propenylacetamid, N-Vinyl-N-methylacetamid, N-Vinyl-N,N-propylpropionamid, N-Acryloylpiperidon, N-Acryloylpyrrolidon, Ethylacryloylpyrrolidon, Methylacryloylpyrrolidon, N-Acryloylcaprolactam, Ethylacryloylcaprolactam, Methylacryloylcaprolactam, N-Cyclohexylacrylamid, N-Cyclopentylacrylamid, Acrylamid, N-Butoxymethylacrylamid, N,N-Dibutylacrylamid, N-Butylacrylamid, Diacetonacrylamid, N-(N,N-Dimethylamino)-ethylacrylamid, N,N-Diethylacrylamid, N,N-Dimethylacrylamid, N-Dodecylmethacrylamid, N-Ethylacrylamid, N-Ethylmethacrylamid, N-Isopropylacrylamid, N-Isopropylmethacrylamid, β,β-N,N-Tetramethylacrylamid, N-Methylolacrylamid, N-Methylacrylamid, N-Octadecylacrylamid, N-Octylacrylamid, N-Phenylacrylamid, Trichloracrylamid sowie Gemischen davon.

**3.** Polymer nach Anspruch 1, das 1 Gew.-% bis 99 Gew.-% N-Vinylformamid und 1 Gew.-% bis 99 Gew.-% der Vinylamid-Gruppierung oder der Acrylamid-Gruppierung umfasst.

**4.** Polymer nach Anspruch 1, das ein Molekulargewicht von 500 amu bis 5.000.000 amu aufweist.

**5.** Zusammensetzung, die ein Polymer nach Anspruch 1 umfasst.

**6.** Zusammensetzung nach Anspruch 5, die des Weiteren einen Inhaltsstoff umfasst, der aus der aus Folgendem bestehenden Gruppe ausgewählt ist: Bioziden, Korrosionshemmern, Emulgatoren, Demulgatoren, Entschäumern, Schmiermitteln, Rheologie-Modifikatoren, Schiefertonquellungshemmern, Lösungsmitteln und Gemischen davon.

**7.** Verwendung der Zusammensetzung nach Anspruch 5, um während des Transports eines Fluids, das Wasser und einen Kohlenwasserstoff umfasst, durch einen Kanal die Bildung und/oder das Wachstum von Gashydraten zu verhindern, zu verzögern und/oder zu reduzieren oder Korrosion zu verhindern, zu verzögern und/ oder zu reduzieren.

**8.** Verfahren zur Prävention, Verzögerung und/oder Reduzierung der Bildung und/oder des Wachstums von Gashydraten oder zur Prävention, Verzögerung und/ oder Reduktion von Korrosion während des Transports eines Fluids, das Wasser und einen Kohlenwasserstoff enthält, durch einen Kanal, welches das Hinzufügen einer in Anspruch 5 definierten Zusammensetzung in eine wässrige Phase umfasst.

**9.** Verfahren nach Anspruch 8, Polymer nach Anspruch 1 oder Zusammensetzung nach Anspruch 5, wobei das Polymer N-Vinylformamid und N-Vinyl-ε-caprolactam umfasst, die in Ethylenglykol und/oder 2-Butoxyethanol synthetisiert wurden.

**10.** Verfahren, Polymer oder Zusammensetzung nach Anspruch 9, wobei das Polymer des Weiteren N-Vinyl-2-pyrrolidon umfasst.

**11.** Polymer nach Anspruch 10, das etwa 20 % N-Vinylformamid, etwa 50 % N-Vinyl-ε-caprolactam und etwa 30 % N-Vinyl-2-pyrrolidon umfasst.

**12.** Zusammensetzung nach Anspruch 5, die eine Zusammensetzung zur Körperpflege oder eine Spezialchemikalien-Zusammensetzung ist.

## Revendications

**1.** Polymère dérivé d'au moins (A) le *N*-vinylformamide, (B) une fraction vinylamide ou une fraction acrylamide, et (C) un solvant réactionnel capable de former un produit d'addition et ayant soit un groupe hydroxyle, soit un groupe thiol, ou des mélanges de ceux-ci, lequel solvant est choisi dans le groupe constitué par l'éthanol, le méthanol, l'hydroxyméthyl-2-caprolactame, la N-hydroxyéthyl-2-pyrrolidone, l'éthylène glycol, le 2-butoxyéthanol, le méthanéthiol et l'éthanethiol ; le polymère possédant une température de point de trouble supérieure à 66 °C, la température de point de trouble étant déterminée visuellement dans une solution à 1 % m/m du polymère dans de l'eau doublement distillée, agitée à 200 tr/min et chauffée à environ 2 °C/min.

**2.** Polymère selon la revendication 1, dans lequel ladite fraction vinylamide et ladite fraction acrylamide sont choisies dans le groupe constitué par : la *N*-vinylpyrrolidone ; la *N*-vinylpipéridone ; le *N*-vinylcaprolactame ; la *N*-vinyl-3-méthylpyrrolidone ; la *N*-vinyl-4-méthylpyrrolidone ; la *N*-vinyl-5-méthylpyrrolidone ; la *N*-vinyl-3-éthylpyrrolidone ; la *N*-vinyl-3-butylpyrrolidone ; la *N*-vinyl-3,3-diméthylpyrrolidone ; la *N*-vinyl-4,5-diméthylpyrrolidone ; la *N*-vinyl-5,5-diméthylpyrrolidone ; la *N*-vinyl-3,3,5-triméthylpyrrolidone ; la *N*-vinyl-5-méthyl-5-éthylpyrrolidone ; la *N*-vinyl-3,4,5-triméthyl-3-éthylpyrrolidone ; la *N*-vinyl-6-méthyl-2-pipéridone ; la *N*-vinyl-6-éthyl-2-pipéridone ; la *N*-vinyl-3,5-diméthyl-2-pipéridone ; la *N*-vinyl-4,4-diméthyl-2-pipéridone ; la *N*-vinyl-6-propyl-2-pipéridone ; la *N*-vinyl-3-octylpipéridone ; le *N*-vinyl-7-méthylcaprolactame ; le *N*-vinyl-7-éthylcaprolactame ; le *N*-vinyl-4-isopropylcaprolactame ; le *N*-vinyl-5-isopropylcaprolactame ; le *N*-vinyl-4-butylcaprolactame ; le *N*-vinyl-5-butylcaprolactame ; le *N*-vinyl-4-butylcaprolactame ; le *N*-vinyl-5-*tert*-butylcaprolactame ; le *N*-vinyl-4-octylcaprolactame ; le *N*-vinyl-5-*tert*-octylcaprolactame ; le *N*-vinyl-4-nonylcaprolactame ; le *N*-vinyl-5-*tert*-4-nonylcaprolactame ; le *N*-vinyl-3,7-diméthylcaprolactame ; le *N*-vinyl-3,5-diméthylcaprolactame ; le *N*-vinyl-4,6-diméthylcaprolactame ; le *N*-vinyl-3,5,7-triméthylcaprolactame ; le *N*-vinyl-2-méthyl-4-isopropylcaprolactame ; le *N*-vinyl-5-isopropyl-7-méthylcaprolactame ; le *N*-vinylformamide ; le *N*-vinylacétamide, le *N*-(2,2-dichloro-vinyl)-propionamide ; le *N*-éthénylacétamide ; le cis-*N*-propénylacétamide ; le *N*-vinyl-*N*-méthylacétamide ; le *N*-vinyl-*N*,*N*-propylpropionamide ; la *N*-acryloylpipéridone, la *N*-acryloylpyrrolidone, l'éthylacryloylpyrrolidone, la méthylacryloylpyrrolidone, le *N*-acryloylcaprolactame, l'éthylacryloylcaprolactame, le méthylacryloylcaprolactame, le *N*-cyclohexylacrylamide, le *N*-cyclopentylacrylamide, l'acrylamide, le *N*-butoxyméthylacrylamide ; le *N*,*N*-dibutylacrylamide ; le *N*-butylacrylamide ; le diacétoneacrylamide ; le *N*-(*N,N*-diméthylamino)éthylacrylamide ; le N,N-diéthylacrylamide ; le *N*,*N*-diméthylacrylamide ; le *N*-dodécylméthacrylamide ; le *N*-éthylacrylamide ; le *N*-éthylméthacrylamide ; le *N*-isopropylacrylamide ; le *N*-isopropylméthacrylamide ; le β,β-*N*,*N*-tétraméthylacrylamide ; le *N*-méthylolacrylamide ; le *N*-méthylacrylamide ; le *N*-octadécylacrylamide ; le *N*-octylacrylamide ; le *N*-phénylacrylamide ; le trichloroacrylamide ; et des mélanges de ceux-ci.

**3.** Polymère selon la revendication 1, qui comprend, en poids, de 1 % à 99 % dudit *N*-vinylformamide et de 1 % à 99 % de ladite fraction vinylamide ou de ladite fraction acrylamide.

**4.** Polymère selon la revendication 1 ayant un poids moléculaire de 500 amu à 5 000 000 amu.

**5.** Composition comprenant le polymère selon la revendication 1.

**6.** Composition selon la revendication 5 qui comprend en outre un ingrédient choisi dans le groupe constitué par : les biocides, les inhibiteurs de corrosion, les émulsifiants, les désémulsifiants, les anti-mousses, les lubrifiants, les modificateurs de rhéologie, les inhibiteurs de gonflement du schiste, les solvants et des mélanges de ceux-ci.

**7.** Utilisation de la composition selon la revendication 5 pour prévenir, retarder et/ou réduire la formation et/ou la croissance d'hydrates gazeux, ou prévenir, retarder et/ou réduire la corrosion pendant le transport d'un fluide comprenant de l'eau et un hydrocarbure à travers une conduite.

**8.** Procédé pour prévenir, retarder et/ou réduire la formation et/ou la croissance d'hydrates gazeux, ou pour prévenir, retarder et/ou réduire la corrosion pendant le transport d'un fluide comprenant de l'eau et un hydrocarbure à travers une conduite qui comprend l'addition dans une phase aqueuse d'une composition telle que définie selon la revendication 5.

**9.** Procédé selon la revendication 8, polymère selon la revendication 1 ou composition selon la revendication 5, dans lequel/laquelle ledit polymère comprend du *N*-vinylformamide et du *N*-vinyl-ε-caprolactame, synthétisés dans de l'éthylène glycol et/ou du 2-butoxyéthanol.

**10.** Procédé, polymère ou composition selon la revendication 9, dans lequel/laquelle ledit polymère comprend en outre de la *N*-vinyl-2-pyrrolidone.

**11.** Polymère selon la revendication 10, qui comprend environ 20 % de *N*-vinylformamide, environ 50 % de *N*-vinyl-ε-caprolactame et environ 30 % de *N*-vinyl-2-pyrrolidone.

**12.** Composition selon la revendication 5, qui est une composition d'hygiène personnelle ou une composition de produits chimiques de haute performance.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4915176 A
- US 5420370 A
- US 5432292 A
- US 5639925 A
- US 5723524 A
- US 6028233 A
- US 6093863 A
- US 6096815 A
- US 6117929 A
- US 6451891 B
- US 6451892 B
- WO 9964717 A
- US 7341617 B
- US 20030018152 A
- US 20060205603 A


### Non-patent literature cited in the description


- Decomposition Rate of Organic Free Radical Polymerization. **K.W. DIXON.** Polymer Handbook. Wiley-Interscience, 1999, vol. 1
- **YODER, C.H. ; SCHAEFFER JR., C.D.** Introduction to Multinuclear NMR. The Benjamin/Cummings Publishing Company, Inc, 1987
- **SILVERSTEIN, R.M. et al.** Spectrometric Identification of Organic Compounds. John Wiley & Sons, 1981
- **ROBERT L. GROB ; EUGENE F. BARRY.** Modern Practice of Gas Chromatography. John Wiley & Sons, 1995
- **SCHRODER, E. et al.** Polymer Characterization. Hanser Publishers, 1989
- **BILLINGHAM, N.C.** Molar Mass Measurements in Polymer Science. Halsted Press, 1979
- **BILLMEYER, F.** Textbook of Polymer Science. Wiley Interscience, 1984